# EUROPEAN PATENT SPECIFICATION

(11) **EP 3 165 341 B1**
(45) Date of publication and mention of the grant of the patent: **10.07.2019**
(21) Application number: 16197215.3
(22) Date of filing: 04.11.2016
(51) Int. Cl.: B28D 1/14

(54) **SHAFT ALIGNMENT APPARATUS AND SHAFT ALIGNMENT POSITION SETTING METHOD**
WELLENAUSRICHTUNGSVORRICHTUNG UND WELLENAUSRICHTUNGSPOSITIONSEINSTELLUNGSVERFAHREN
APPAREIL D'ALIGNEMENT D'ARBRE ET PROCÉDÉ DE RÉGLAGE DE POSITION D'ALIGNEMENT D'ARBRE

(30) Priority: 04.11.2015 JP 2015216957
(43) Date of publication of application: 10.05.2017
(73) Proprietor: Nidek Co., Ltd., Gamagori Aichi (JP)
(72) Inventor: KANDA, Yuji, Gamagori, Aichi (JP); SHIBATA, Ryoji, Gamagori, Aichi (JP)
(74) Representative: Hoefer & Partner Patentanwälte mbB

(56) References cited:
- EP-A1- 0 933 163
- US-A- 4 163 622

## Description

### BACKGROUND

The present disclosure relates to a shaft alignment apparatus and a shaft alignment position setting method for setting a mounting position of a lens holding shaft that holds an eyeglass lens interposed therein, with respect to the eyeglass lens.

Hitherto, there has been known a technique for forming a hole in an eyeglass lens which is held by a lens holding shaft. For example, in an eyeglass lens processing apparatus disclosed in JP-A-2007-7788, the position of a hole to be formed is designated by a touch panel after a fixed position of a cup having a lens rotation shaft mounted thereto with respect to an eyeglass lens is determined. Further, a shaft alignment apparatus to the preamble portion of claim 1 is known from EP 0 933 163 A1.

When a hole is formed through an eyeglass lens held by a lens holding shaft, the lens holding shaft and a hole forming device may interfere (for example, come into contact) with each other. In this case, for example, a defect in which the hole forming device does not reach a position of a hole to be formed or a defect in which a relative angle of the hole forming device with respect to the eyeglass lens cannot be adjusted to an appropriate angle may occur in the vicinity of a position of the eyeglass lens to which the lens holding shaft is attached. In other words, the vicinity of the position of the eyeglass lens to which the lens holding shaft is attached may be a processing inappropriate region in which it is difficult to appropriately form a hole. In the related art, a hole may not be appropriately formed due to the influence of a processing inappropriate region.

### SUMMARY

An exemplified object of the present disclosure is to provide a shaft alignment apparatus and a shaft alignment position setting program which are capable of preventing the occurrence of a defect in which a hole is not appropriately formed through an eyeglass lens.

The present invention provides the following configurations.
(1) A shaft alignment apparatus comprising:
   a controller configured to control the shaft alignment apparatus and set a shaft alignment position, which is a mounting position with respect to an eyeglass lens, of a lens holding shaft configured to hold the eyeglass lens during processing of the eyeglass lens, and
   wherein the shaft alignment position is set other than at a geometric center of a target lens shape in to which the eyeglass lens is to be processed,
   wherein a processing inappropriate region in a vicinity of the shaft alignment position is set not to overlap with a position of a hole to be formed through the eyeglass lens.
(2) The shaft alignment apparatus according to (1), wherein the controller acquires hole arrangement information indicating an arrangement of the hole to be formed through the eyeglass lens, and sets the shaft alignment position based on the acquired hole arrangement information.
(3) The shaft alignment apparatus according to (2), wherein the controller acquires information regarding the processing inappropriate region which is present in the vicinity of the shaft alignment position, and sets the shaft alignment position based on the acquired information regarding the processing inappropriate region.
(4) The shaft alignment apparatus according to (3), wherein
   the controller:
   acquires information indicating a position of the geometric center in the eyeglass lens;
   determines whether or not the processing inappropriate region overlaps with the position of the hole to be formed if the geometric center is set as the shaft alignment position based on the hole arrangement information and the information regarding the processing inappropriate region;
   sets the shaft alignment position at the geometric center if the controller determines that the processing inappropriate region does not overlap with the position of the hole to be formed; and
   sets the shaft alignment position to the position other than at the geometric center when the controller determines that the processing inappropriate region overlaps the position of the hole to be formed.
(5) The shaft alignment apparatus according to (3) or (4), wherein the controller calculates the shaft alignment position by using the hole arrangement information and the information regarding the processing inappropriate region when the shaft alignment position is set to the position other than at the geometric center.
(6) The shaft alignment apparatus according to (5), wherein the controller calculates the shaft alignment position which is closest to the geometric center among shaft alignment positions at each of which the processing inappropriate region does not overlap with the position of the hole if the shaft alignment position is set at the geometric center.
(7) The shaft alignment apparatus according to (3) or (4), further comprising:
   instruction reception means for receiving an input of an instruction for designating the shaft alignment position,
   wherein the controller displays the processing inappropriate region moving in accordance with the shaft alignment position and information regarding the position of the hole on a display unit, and sets the shaft alignment position by a designation through the instruction reception unit.
(8) The shaft alignment apparatus according to (1), wherein
   at least one shaft alignment position, which is the position other than at the geometric center, at which the processing inappropriate region does not overlap with the position of the hole is determined in advance, and
   the controller sets a position, which is determined in advance, as the shaft alignment position.
(9) The shaft alignment apparatus according to (2), wherein
   the controller determines a plurality of shaft alignment positions at each of which the processing inappropriate region does not overlap with the position of the hole in advance in accordance with a hole arrangement pattern, and
   the controller sets, as the shaft alignment position, a position corresponding to the hole arrangement pattern corresponding to the hole indicated by the acquired hole arrangement information, among the plurality of shaft alignment positions determined in advance.
(10) The shaft alignment apparatus according to any one of (1) to (9), wherein the controller generates processing data based on information regarding the set shaft alignment position.
(11) A shaft alignment apparatus comprising:
   a controller configured to control the shaft alignment apparatus and set a shaft alignment position, which is a mounting position with respect to an eyeglass lens, of a lens holding shaft configured to hold the eyeglass lens during processing of the eyeglass lens,
   wherein the controller acquires hole arrangement information indicating an arrangement of a hole to be formed through the eyeglass lens to set the shaft alignment position with respect to the eyeglass lens having the hole, and
   wherein the controller sets the shaft alignment position at which a processing inappropriate region in a vicinity of the shaft alignment position does not overlap with a position of the hole based on the hole arrangement information.
(12) A shaft alignment position setting method comprising:
   setting a shaft alignment position, which is a mounting position with respect to an eyeglass lens, of a lens holding shaft configured to hold the eyeglass lens during processing of the eyeglass lens, wherein the shaft alignment position is set other than at a geometric center of a target lens shape in to which the eyeglass lens is to be processed, and a processing inappropriate region in a vicinity of the shaft alignment position is set not to overlap with a position of a hole to be formed through the eyeglass lens.

### BRIEF DESCRIPTION OF THE DRAWINGS

Fig. 1 is a diagram showing a schematic configuration of a shaft alignment apparatus 1.
Fig. 2 is a block diagram showing an electrical configuration of the shaft alignment apparatus 1.
Fig. 3 is a diagram showing a state where an eyeglass lens LE held by lens holding shafts 40A and 40B is processed by a hole forming device 41.
Fig. 4 is a flowchart showing a shaft alignment position setting process performed by the shaft alignment apparatus 1.
Fig. 5 is a flowchart showing an automatic computational setting process performed in the shaft alignment position setting process.
Fig. 6 is a diagram showing an example in a case where a geometric center GC of a target lens shape is set at a shaft alignment position 45 to thereby appropriately form a hole 43.
Fig. 7 is a diagram showing an example in a case where the shaft alignment position 45 having the hole 43 appropriately formed therein is computationally calculated.
Fig. 8 is a flowchart showing a manual setting process performed in the shaft alignment position setting process.
Fig. 9 is a diagram showing an example of a screen displayed on a monitor 8 in the manual setting process.
Fig. 10 is a flowchart showing a predetermined position setting process performed in the shaft alignment position setting process.
Fig. 11 is a diagram showing an example of a relationship between an arrangement pattern of the holes 43 and a predetermined position.
Fig. 12 is a diagram showing an example of a relationship between an arrangement pattern of the holes 43 and a predetermined position.

### DESCRIPTION OF ILLUSTRATIVE EMBODIMENTS

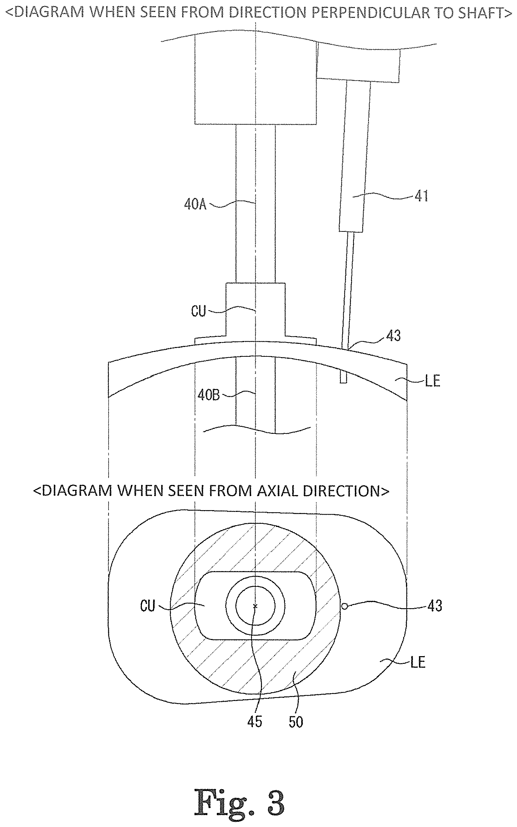

Hereinafter, one typical embodiment in the present disclosure will be described with reference to the accompanying drawings. In the present embodiment, a cup mounting apparatus that attaches a cup CU having lens holding shafts 40A and 40B (see Fig. 3) mounted thereto to an eyeglass lens LE will be described as an example of a shaft alignment apparatus 1 that sets mounting positions (hereinafter, referred to as "shaft alignment positions") of the lens holding shafts 40A and 40B with respect to the eyeglass lens LE. However, at least a portion of a technique described in the present embodiment can also be applied to apparatuses other than the cup mounting apparatus. For example, at least a portion of the technique described in the present embodiment can also be applied to an eyeglass lens processing apparatus that directly attaches lens holding shafts 40A and 40B to an eyeglass lens LE without going through a cup CU, an eyeglass lens processing apparatus that has a function of attaching a cup CU, an apparatus that applies a mark point to a shaft alignment position, and the like. The technique described in the present embodiment can also be applied to an apparatus that notifies a user of a determined shaft alignment position using a monitor or the like, without performing an operation of attaching a cup CU, lens holding shaft 40A, 40B, or the like. In addition, at least some of processes described in the present embodiment can also be performed in a personal computer or the like. For example, information, such as a shaft alignment position which is set in a personal computer or the like, may be acquired by a cup mounting apparatus, an eyeglass lens processing apparatus, or the like through wireless communication, wired communication, or a detachable memory. In this case, the personal computer or the like functions as a shaft alignment apparatus.

### <Mechanical Configuration>

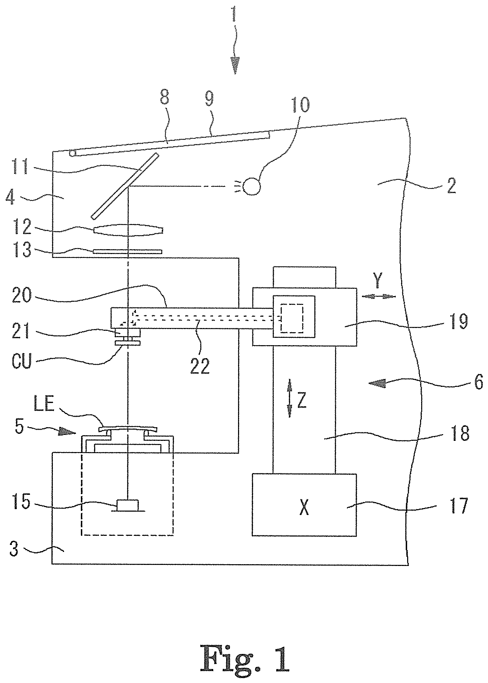

A mechanical configuration of the shaft alignment apparatus 1 in the present embodiment will be schematically described with reference to Fig. 1. Fig. 1 is a diagram when a schematic configuration of the shaft alignment apparatus 1 is seen from the right side. The front-back direction of the paper in Fig. 1 will be referred to as a horizontal direction (X-direction) of the apparatus, the horizontal direction of the paper will be referred to as a front-back direction (Y-direction) of the apparatus, and the vertical direction of the paper will be referred to as a vertical direction (Z-direction) of the apparatus.

The shaft alignment apparatus 1 of the present embodiment includes a main body 2, a lower protruding portion 3, and an upper protruding portion 4. The main body 2 is a box-shaped member that extends in the vertical direction. The lower protruding portion 3 protrudes frontward from below the main body 2. The upper protruding portion 4 protrudes upward from above the main body 2. A lens supporting mechanism 5 is provided at an upper portion of the lower protruding portion 3. The lens supporting mechanism 5 holds an eyeglass lens LE by upper ends of a plurality of supporting pins.

An optical system that measures a refractive power of the eyeglass lens LE, an optical center, and the like will be described. The shaft alignment apparatus 1 includes an illumination light source 10, a reflection mirror 11, a collimator lens 12, an index plate 13, and an imaging element 15.

The illumination light source 10 generates illumination light for irradiation of the eyeglass lens LE. As an example, the illumination light source 10 of the present embodiment is provided within the upper protruding portion 4. However, it is also possible to change the arrangement of the illumination light source 10. The reflection mirror 11 reflects illumination light generated by the illumination light source 10 toward the eyeglass lens LE. The collimator lens 12 collimates illumination light reflected by the reflection mirror 11 into a parallel luminous flux having a diameter larger than that of the eyeglass lens LE. A visual target (for example, a ring visual target or the like) for detecting an optical center of the eyeglass lens LE, and the like is formed in the index plate 13. The index plate 13 of the present embodiment is provided on the upstream side (inside the upper protruding portion 4 in the present embodiment) of the eyeglass lens LE in an optical path of illumination light. However, the index plate 13 may be provided at an optical path on the downstream side (imaging element 15 side) of the eyeglass lens LE. The imaging element 15 (for example, a CCD sensor or the like) receives a luminous flux of illumination light having passed through the eyeglass lens LE. A refractive power of the eyeglass lens LE, the position of an optical center, and the like are measured by an image captured by the imaging element 15.

A configuration of a cup mounting mechanism 6 will be described. The cup mounting mechanism 6 holds a cup CU. The cup mounting mechanism relatively changes the positions of the held cup CU and the eyeglass lens LE supported by the lens supporting mechanism 5 to thereby attach the cup CU to an appropriate position on a lens surface of the eyeglass lens LE. As a result, lens holding shafts 40A and 40B (see Fig. 3) of an eyeglass lens processing apparatus 38 are attached to appropriate positions in the eyeglass lens LE.

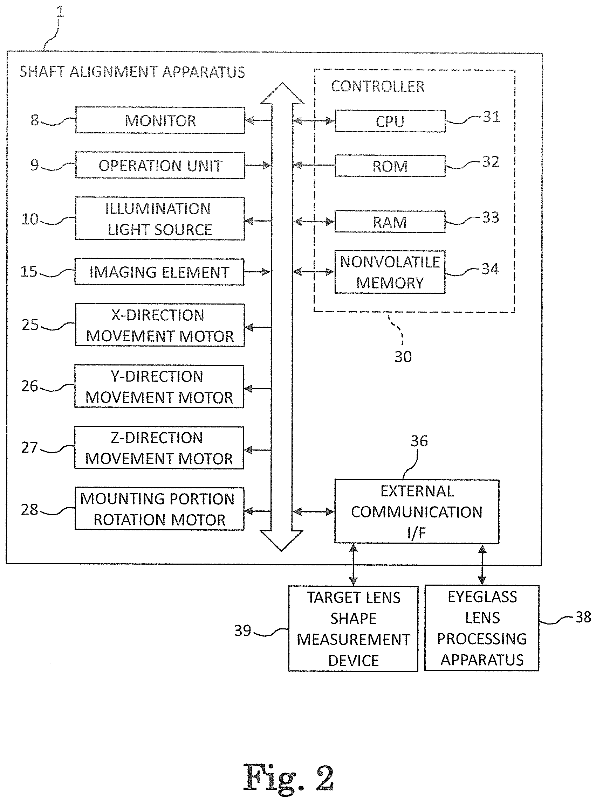

The cup mounting mechanism 6 of the present embodiment includes an X-direction movement mechanism 17, a Z-direction movement mechanism 18, a Y-direction movement mechanism 19, and an arm 20. The X-direction movement mechanism 17 is provided at a lower portion of the main body 2, and moves in the X-direction (horizontal direction) by the power of an X-direction movement motor 25 (see Fig. 2). The Z-direction movement mechanism 18 extends upward from the X-direction movement mechanism 17. The Z-direction movement mechanism 18 moves in the Z-direction (vertical direction) with respect to the X-direction movement mechanism 17 by the power of a Z-direction movement motor 26 (see Fig. 2). The Y-direction movement mechanism 19 is provided in the Z-direction movement mechanism 18. The Y-direction movement mechanism 19 moves in the Y-direction (front-back direction) with respect to the Z-direction movement mechanism 18 by the power of a Y-direction movement motor 27 (see Fig. 2). The arm 20 extends in the horizontal direction from the Y-direction movement mechanism 19. A mounting portion 21 having the cup CU mounted thereto is provided at a tip end portion of the arm 20. A power transmission mechanism 22 transmitting the power of a mounting portion rotation motor 28 (see Fig. 2) to the mounting portion 21 is provided inside the arm 20. When the mounting portion rotation motor 28 rotates, the mounting portion 21 rotates centering around a mounting central shaft of the cup CU extending in the vertical direction. Meanwhile, it is needless to say that it is possible to change a configuration of the cup mounting mechanism 6.

In the shaft alignment apparatus 1 of the present embodiment, a monitor 8 is provided at an upper portion of the upper protruding portion 4. Various images are displayed on the monitor 8. In addition, the shaft alignment apparatus 1 is provided with an operation unit 9 which is operated by a user in order to input various instructions. The shaft alignment apparatus 1 can receive a user's various instructions through the operation unit 9 which is an instruction reception unit. In the present embodiment, a touch panel provided on the surface of the monitor 8 is used as the operation unit 9. However, it is needless to say that it is possible to adopt not only a touch panel but also at least one a button, a mouse, and a remote controller as the operation unit 9.

### <Electrical Configuration>

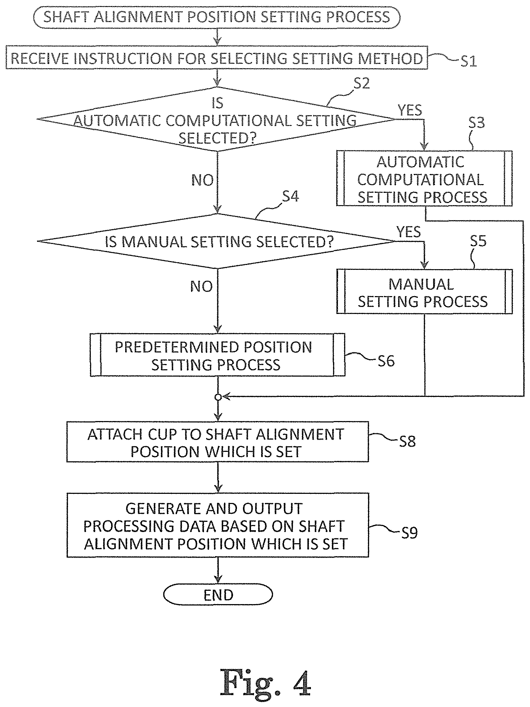

An electrical configuration of the shaft alignment apparatus 1 in the present embodiment will be described with reference to Fig. 2. The shaft alignment apparatus 1 includes a controller 30 that controls the shaft alignment apparatus 1. The controller 30 includes a CPU 31, a ROM 32, a RAM 33, and a nonvolatile memory 34. The CPU (processor) 31 performs various processes in the shaft alignment apparatus 1. Various programs, initial values, and the like are stored in the ROM 32. The RAM 33 temporarily stores various pieces of information. The nonvolatile memory 34 is a non-transitory storage medium (for example, a flash ROM, a hard disk drive, or the like) which can hold stored contents in spite of the interruption of power supply. A control program (for example, a shaft alignment position setting program for performing a shaft alignment position setting process shown in Fig. 4, or the like) for controlling the operation and processing of the shaft alignment apparatus 1 may be stored in the nonvolatile memory 34.

The monitor 8, the operation unit 9, the illumination light source 10, the imaging element 15, various motors 25 to 28, an external communication I/F 36, and the like are connected to the controller 30 through a bus. The external communication I/F 36 connects the shaft alignment apparatus 1 to an external device through wireless communication or wired communication.

The shaft alignment apparatus 1 may be connected to, for example, the eyeglass lens processing apparatus 38 that processes the eyeglass lens LE. In this case, the shaft alignment apparatus 1 may output information regarding a shaft alignment position which is set with respect to the eyeglass lens LE to be processed, to the eyeglass lens processing apparatus 38. The eyeglass lens processing apparatus 38 may control a processing operation based on information regarding a shaft alignment position to thereby perform various types of processing (for example, processing of forming a target lens shape, processing of forming a hole, and the like) of a set shape on a position which is set in the eyeglass lens LE.

In addition, the shaft alignment apparatus 1 may be connected to a target lens shape measurement device 39 that measures a target lens shape formed in the eyeglass lens LE. Various configurations can be adopted for the target lens shape measurement device 39. For example, the target lens shape measurement device 39 may measure a target lens shape by mechanically or optically measuring the shape of a demonstration lens mounted to an eyeglass frame. In addition, the target lens shape measurement device 39 may measure a target lens shape by measuring the shape of an eyeglass frame to which a processed eyeglass lens is mounted. Meanwhile, the shaft alignment apparatus 1 or the eyeglass lens processing apparatus 38 may have a function of measuring a target lens shape. In this case, the shaft alignment apparatus 1 may not acquire information regarding a target lens shape from another apparatus. In addition, if a target lens shape is known already, the shaft alignment apparatus 1 may acquire information regarding a target lens shape which is known already through communication or the like without acquiring information regarding the measured target lens shape. In addition, the shaft alignment apparatus 1 may acquire information regarding a target lens shape which is selected by a user.

### <Processing Inappropriate Region>

A processing inappropriate region shown in the vicinity of a shaft alignment position will be described with reference to Fig. 3. Fig. 3 shows a state where the eyeglass lens LE held by the lens holding shafts 40A and 40B is processed by a hole forming device 41 in the eyeglass lens processing apparatus 38. The upper diagram in Fig. 3 is a diagram when the eyeglass lens LE is seen from a direction perpendicular to the lens holding shafts 40A and 40B. The lower diagram in Fig. 3 is a diagram when the eyeglass lens LE is seen from the direction of the lens holding shafts 40A and 40B.

The eyeglass lens processing apparatus 38 in the present embodiment attaches the lens holding shafts 40A and 40B from the front lens surface and the rear lens surface of the eyeglass lens LE, respectively, to thereby hold the eyeglass lens LE interposed therein. The two lens holding shafts 40A and 40B are configured to be coaxial with each other. In the present embodiment, the cup CU is previously attached to an appropriate position on the lens surface of the eyeglass lens LE by the shaft alignment apparatus 1 so that a shaft alignment position 45 which is a mounting position of the lens holding shafts 40A and 40B is set. In the present embodiment, the lens holding shaft 40A is mounted to the cup CU attached to the eyeglass lens LE so that the lens holding shafts 40A and 40B are mounted at the shaft alignment position 45. However, the eyeglass lens processing apparatus 38 may directly attach the lens holding shafts 40A and 40B to the eyeglass lens LE without going through the cup CU. In this case, the eyeglass lens processing apparatus 38 may set a shaft alignment position in the eyeglass lens LE. The eyeglass lens processing apparatus 38 can perform various types of processing including hole forming on the eyeglass lens LE in a state where the eyeglass lens LE is held at the shaft alignment position 45 by the lens holding shafts 40A and 40B.

As shown in the upper diagram in Fig. 3, the eyeglass lens processing apparatus 38 of the present embodiment includes the hole forming device 41 that forms the hole 43 in the eyeglass lens LE. The hole forming device 41 of the present embodiment proceeds in the axial direction while rotating centering around a processing shaft, and thus can form a through hole penetrating the eyeglass lens LE in the thickness direction or a recessed hole that does not penetrate the eyeglass lens LE. The processing shaft of the hole forming device 41 is installed so that a relative angle with respect to the lens holding shafts 40A and 40B can be positioned within a fixed range, in order to form the hole 43 in the lens surface of the eyeglass lens LE. As an example, in the present embodiment, a relative angle between the processing shaft of the hole forming device 41 and the lens holding shafts 40A and 40B is approximately three degrees. Meanwhile, the eyeglass lens processing apparatus 38 may include an angle adjustment mechanism that changes a relative angel of the processing shaft of the hole forming device 41 with respect to the lens holding shafts 40A and 40B.

As shown in the upper diagram in Fig. 3, when the hole forming device 41 approaches the lens holding shafts 40A and 40B, the lens holding shafts 40A and 40B and the hole forming device 41 may interfere (for example, come into contact) with each other. In this case, the hole forming device 41 may not be allowed to reach the vicinity of the shaft alignment position 45 in the eyeglass lens LE. In addition, the angle of the hole forming device 41 with respect to the lens holding shafts 40A and 40B may be changed so that the tip end of the hole forming device 41 can reach the vicinity of the shaft alignment position 45. However, in this case, there is the possibility that the angle of the hole 43 formed through the eyeglass lens LE is not set as an appropriate angle. Therefore, as shown in the lower diagram in Fig. 3, the vicinity of the shaft alignment position 45 in the eyeglass lens LE may be a processing inappropriate region 50 in which it is difficult to appropriately form the hole 43 using the hole forming device 41.

The shaft alignment apparatus 1 (for example, a cup mounting apparatus, an eyeglass lens processing apparatus, a PC, or the like) of the present embodiment sets a shaft alignment position where a position at which a hole is formed through the eyeglass lens LE does not overlap with the processing inappropriate region 50, at the time of setting the shaft alignment position 45. As a result, it is possible to suppress the occurrence of a defect in which a hole is not appropriately formed through the eyeglass lens LE. Details thereof will be described below.

### <Shaft Alignment Position Setting Process>

A shaft alignment position setting process performed by the CPU 31 of the shaft alignment apparatus 1 will be described with reference to Figs. 4 to 12. As described above, a shaft alignment position setting program for performing the shaft alignment position setting process shown in Fig. 4 is stored in the nonvolatile memory 34. The CPU 31 performs the shaft alignment position setting process shown in Fig. 4 in accordance with a shaft alignment position setting program when an instruction for starting to set a shaft alignment position in the eyeglass lens LE having a hole formed through the lens surface thereof is input.

First, the CPU 31 receives a user's instruction for selecting a method of setting a shaft alignment position (S1). The shaft alignment apparatus 1 of the present embodiment can set a shaft alignment position in the eyeglass lens LE using any one of a plurality of methods. As an example, the shaft alignment apparatus 1 of the present embodiment can set a shaft alignment position using three methods of automatic computational setting, manual setting, and predetermined position setting. A user can select a desired method by operating the operation unit 9 (see Figs. 1 and 2). However, the shaft alignment apparatus 1 may be able to perform only one setting method.

When the automatic computational setting is selected (S2: YES), the CPU 31 performs an automatic computational setting process (S3). When the manual setting is selected (S2: NO, S4: YES), the CPU 31 performs a manual setting process (S5). When the predetermined position setting is selected (S4: NO), the CPU 31 performs a predetermined position setting process (S6). Hereinafter, the setting processes will be described in detail.

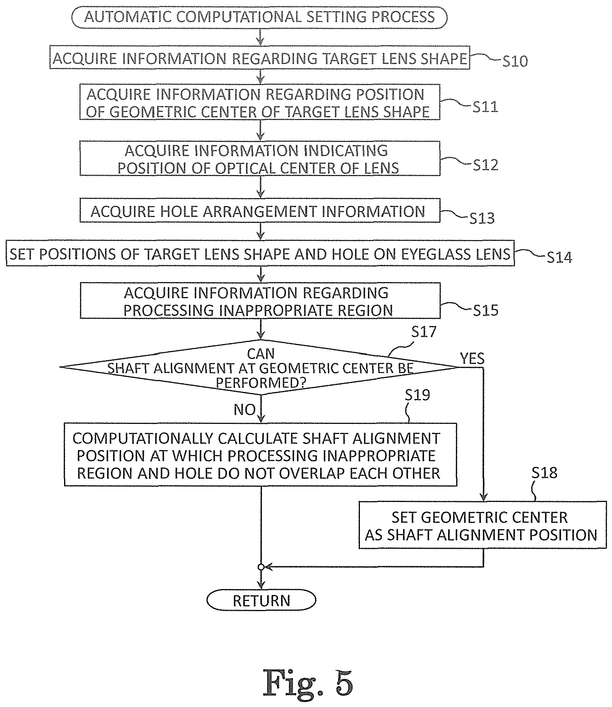

The automatic computational setting process will be described with reference to Figs. 5 to 7. In the automatic computational setting process, the CPU 31 can automatically set a shaft alignment position at which a hole is appropriately formed through the eyeglass lens LE by computational operation.

First, the CPU 31 acquires information regarding a target lens shape (hereinafter, may also be referred to as a "target lens shape information ") which is formed by processing the peripheral edge of the eyeglass lens LE which is not yet processed (S10). For example, the CPU 31 may acquire information regarding a target lens shape which is measured from the shape of a demonstration lens, or may acquire information regarding a target lens shape which is selected by a user.

The CPU 31 acquires information indicating the position of a geometric center (may also be referred to as a frame core) of a target lens shape (S11). For example, the CPU 31 may obtain the position of the geometric center in the target lens shape by computational calculation based on the target lens shape information acquired in S10 to thereby acquire positional information of the geometric center. For example, the CPU 31 may obtain the center of the target lens shape in the horizontal direction and the center thereof in the vertical direction as the geometric center. For example, the center of a box (boxing center) in a case where a target lens shape is surrounded by a quadrangular box can also be obtained as the geometric center. In addition, if the position of the geometric center of the target lens shape is known already, the CPU 31 may acquire information regarding the position of the geometric center, which is known already, as it is.

The CPU 31 acquires information indicating the position of the optical center of the eyeglass lens LE which is not yet processed (S12). As an example, the shaft alignment apparatus 1 of the present embodiment can detect and acquire the position of the optical center using the illumination light source 10, the imaging element 15, and the like. However, it is also possible to change a method of detecting the position of the optical center. For example, the CPU 31 may acquire the position of an optical center, which is detected using another apparatus, through the external communication I/F 36 and the like.

The CPU 31 acquires hole arrangement information indicating the arrangement of a hole formed through the eyeglass lens LE (S13). For example, the CPU 31 may acquire information indicating the arrangement of the hole which is determined in advance in a case where the arrangement of the hole is determined in advance in accordance with at least any one of a target lens shape and a frame. In addition, the CPU 31 may make a user operate the operation unit 9 to thereby make the user designate the arrangement of a hole to be formed through the eyeglass lens LE.

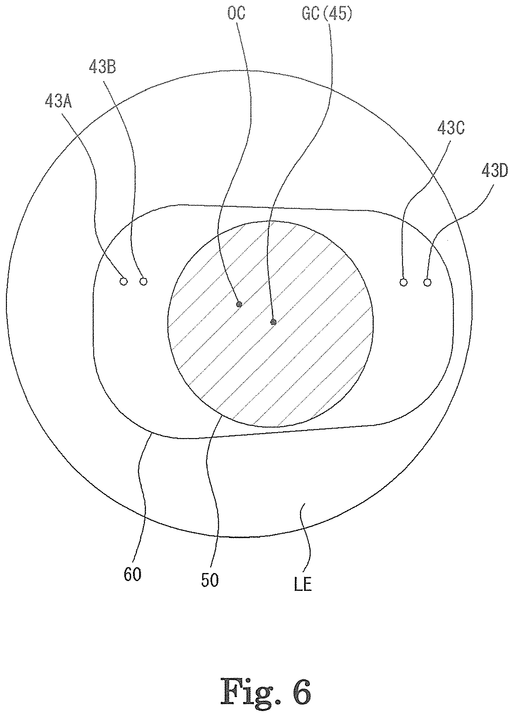

The CPU 31 sets the positions of a target lens shape and a hole which are to be formed on the eyeglass lens LE which is not yet processed (S14). As shown in Fig. 6, the CPU 31 sets the positions of an optical center OC of the eyeglass lens LE, a geometric center GC of the target lens shape, a target lens shape 60, and holes 43 on the eyeglass lens LE based on information regarding the positions. For example, the CPU 31 may determine the position of the target lens shape 60 which is set on the eyeglass lens LE, based on a distance between the pupils of a user which is acquired in advance.

The CPU 31 acquires information regarding the processing inappropriate region 50 (S15). As described above, the processing inappropriate region 50 is a region which is positioned in the vicinity of the shaft alignment position 45. In the processing inappropriate region 50, it may be difficult to appropriately form the hole 43 using the hole forming device 41. In general, the shape and size of the processing inappropriate region 50 vary depending on the configuration of the eyeglass lens processing apparatus. For example, the CPU 31 may acquire information regarding the processing inappropriate region 50 from the eyeglass lens processing apparatus 38 that processes the eyeglass lens LE. In addition, if the shape and size of the processing inappropriate region 50 are determined in advance, the CPU 31 may acquire information regarding the shape and size of the processing inappropriate region 50 which are determined in advance, as it is. Information regarding the processing inappropriate region 50 corresponding to each of a plurality of types of eyeglass lens processing apparatuses may be determined in advance. In addition, the CPU 31 may acquire the shape and size of the processing inappropriate region 50 which is designated by a user through the operation unit 9 or the like.

The CPU 31 determines whether or not the hole 43 is appropriately formed through a case where the geometric center GC of the target lens shape 60 is set as the shaft alignment position 45 (S17). In detail, the CPU 31 of the present embodiment determines whether or not the processing inappropriate region 50 overlaps with the position of the hole 43 to be formed if the geometric center GC is set as the shaft alignment position 45, based on various pieces of information including hole arrangement information and information regarding the processing inappropriate region 50. For example, the CPU 31 may set the processing inappropriate region 50 if the geometric center GC is assumed to be the shaft alignment position 45, on the eyeglass lens LE, which is not yet processed, in which the positions of the target lens shape 60 and the holes 43 to be formed are set (see Fig. 6). As shown in Fig. 6, if the position of any of the holes 43 does not overlap with the processing inappropriate region 50, the CPU 31 may determine that the geometric center GC can be set as the shaft alignment position 45.

If it is determined that the geometric center GC can be set as the shaft alignment position 45 (S17: YES), the CPU 31 of the present embodiment sets the geometric center GC as the shaft alignment position 45 (S18). When the geometric center GC is set as the shaft alignment position 45, a bevel angle in a case where a bevel is formed in at least a portion of the eyeglass lens LE, an angle of a processed surface in a case where plano-processing is performed, an angle of a hole formed through the eyeglass lens LE, and the like have a tendency to be satisfactorily formed.

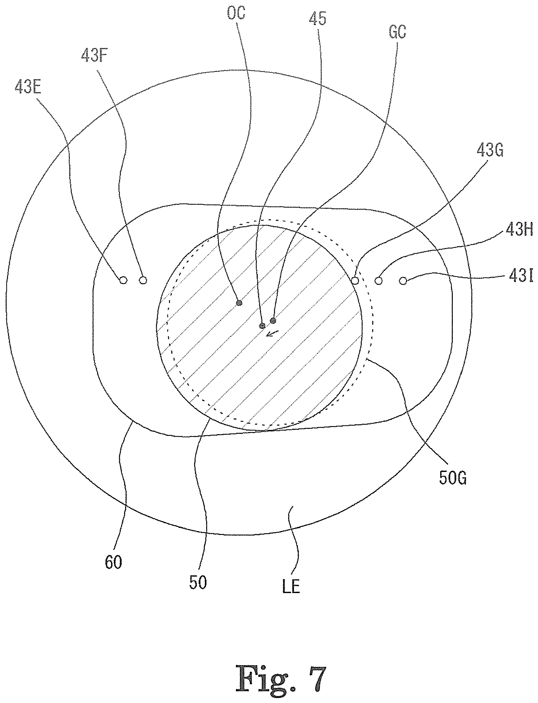

On the other hand, in an example shown in Fig. 7, a processing inappropriate region 50G (indicated by a dotted line in Fig. 7) in a case where the geometric center GC is assumed to be the shaft alignment position 45 overlaps a hole 43G. In this case, there is the possibility that the hole 43G is not appropriately formed through an automatic computational setting process, when the CPU 31 determines that at least any one of the holes 43 is not appropriately processed (in other words, the geometric center GC cannot be set as the shaft alignment position 45) (S17: NO), the CPU computationally calculates the shaft alignment position 45 at which the processing inappropriate region 50 does not overlap any of the holes 43 (S19).

An example of a method of computationally calculating a shaft alignment position 45 will be described with reference to Fig. 7. The CPU 31 of the present embodiment computationally calculates a shaft alignment position 45 which is closest to the geometric center GC among shaft alignment positions at which the position of a hole 43 to be formed does not overlap with the processing inappropriate region 50. In this case, influence due to a deviation of the shaft alignment position 45 from the geometric center GC is reduced. For example, in the example shown in Fig. 7, when the geometric center GC is assumed to be the shaft alignment position 45, the processing inappropriate region 50G overlaps the hole 43G. In this case, the CPU 31 deviates the shaft alignment position 45 from the geometric center GC along a direction in which the geometric center GC and the hole 43G are connected to each other until the hole 43G falls outside the processing inappropriate region 50 (in detail, until the outer periphery of the hole 43G and the outer periphery of the processing inappropriate region 50 come into contact with each other).

It is also possible to change a method of computationally calculating a shaft alignment position 45. For example, the CPU 31 may consider the positions of a plurality of holes 43 for each coordinate quadrant in an orthogonal coordinate system centering around the geometric center GC. In this case, the CPU 31 may set a hole 43 closest to the geometric center GC in each of the quadrants as a representative hole and may computationally calculate a position where distances from all of the representative holes 43 are equal to each other, as a shaft alignment position 45. The CPU 31 may computationally calculate a plurality of shaft alignment positions 45, and may adopt one of the plurality of shaft alignment positions 45 computationally calculated, based on an operation instruction which is input by a user, and the like.

Meanwhile, a shaft alignment position 45 at which all of the holes 43 fall outside the processing inappropriate region 50 may not be present depending on the arrangement of the holes 43, or the like. In addition, the eyeglass lens LE may not be appropriately held at the shaft alignment position 45 which is obtained by computational operation (for example, the cup CU may protrude further outward than the target lens shape 60). In these cases, the CPU 31 may notify a user of an error indicating that the hole 43 cannot be appropriately formed, and may terminate the process. In addition, the CPU 31 may perform a process of changing the position of the hole 43.

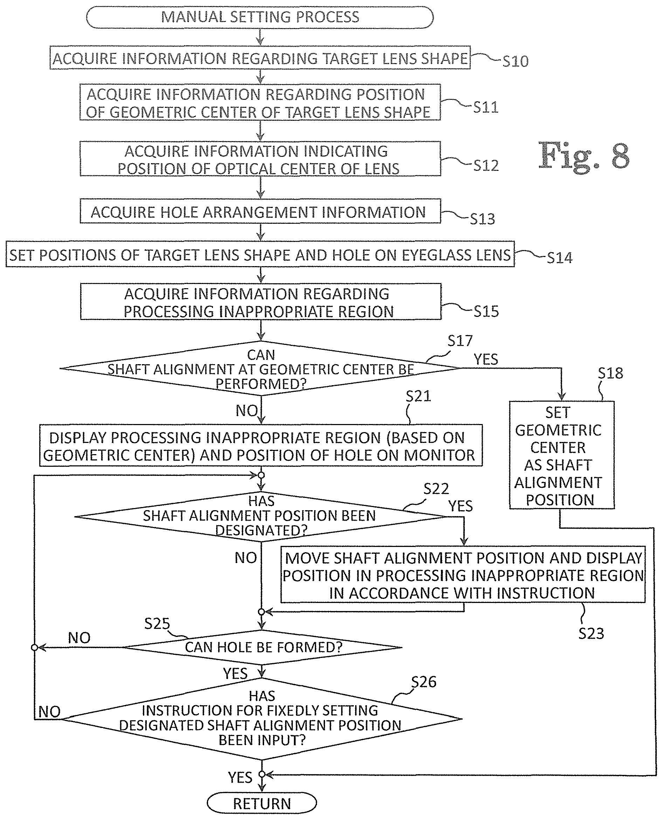

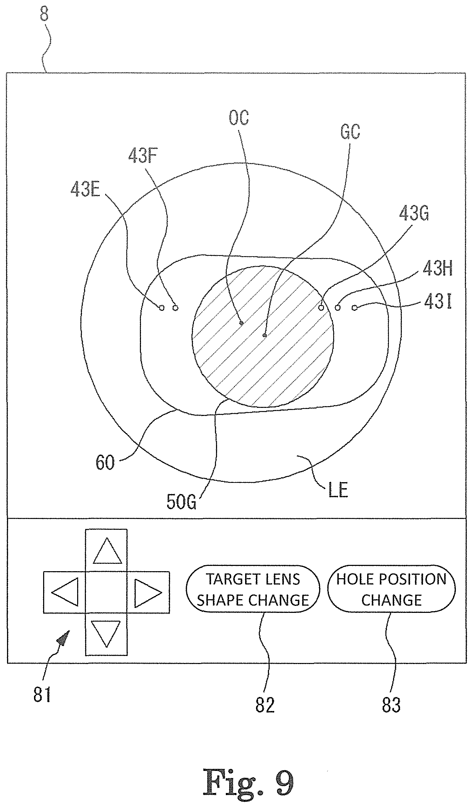

The manual setting process will be described with reference to Figs. 8 and 9. In the manual setting process, a user can personally manually set a shaft alignment position 45 at which a hole 43 is appropriately formed through an eyeglass lens LE. Meanwhile, the same process as a portion of the automatic computational setting process shown in Fig. 5 can be adopted as a portion of the manual setting process shown in Fig. 8. Therefore, steps for which the same processes as those shown in Fig. 5 will be denoted by the same step numbers as those in Fig. 5, and a description thereof will be simplified.

As shown in Fig. 8, the CPU 31 acquires various pieces of information and sets the positions of the target lens shape 60 and the hole 43 on the eyeglass lens LE (S10 to S15). The CPU 31 determines whether or not the geometric center GC can be set as the shaft alignment position 45 (S17). If the determination result is affirmative (S17: YES), the CPU 31 sets the geometric center GC as the shaft alignment position 45 (SI8). If the determination result is negative (S17: NO), the CPU 31 performs a process for setting the shaft alignment position 45 in accordance with a user's instruction (S21 to S26).

As shown in Fig. 9, the CPU 31 displays the position of a processing inappropriate region 50G (in other words, the processing inappropriate region 50G in a case where the geometric center GC is assumed to be the shaft alignment position 45) based on the geometric center GC and the position of a hole 43 to be formed, on the monitor 8 which is a display unit. As an example, in the manual setting process of the present embodiment, a processing inappropriate region 50, a hole 43, a geometric center GC, and an optical center OC are displayed on the monitor 8 together with an eyeglass lens LE and a target lens shape 60. In addition, in the manual setting process of the present embodiment, a movement button 81, a target lens shape change button 82, and a hole position change button 83 are displayed on the monitor 8. A user can touch the movement button 81 to thereby input an instruction for designating the shaft alignment position 45 (in the present embodiment, an instruction for moving the shaft alignment position 45) to the shaft alignment apparatus 1. When the target lens shape change button 82 is operated, the CPU 31 changes the shape or size of the target lens shape 60. When the hole position change button 83 is operated, the CPU 31 changes the position of the hole 43 formed through the eyeglass lens LE.

Meanwhile, it is also possible to change a method of displaying information regarding the processing inappropriate region 50 and the hole 43. For example, the CPU 31 may displays at least any one of a distance between the processing inappropriate region 50 and the hole 43, a direction thereof, and the like on the monitor 8 instead of images of the processing inappropriate region 50 and the hole 43 or together with the images.

The CPU 31 determines whether or not a shaft alignment position 45 has been designated (S22). In other words, the CPU 31 determines whether or not an instruction for the movement of the shaft alignment position 45 has been input. When the instruction is not input (S22: NO), the process proceeds to S25 as it is. When a new shaft alignment position 45 is designated in accordance with the input instruction (S22: YES), the CPU 31 moves the shaft alignment position 45 and a display position in the processing inappropriate region 50 on the monitor 8 in accordance with the input instruction (S23). Therefore, a user can set an appropriate shaft alignment position 45 while comparing the processing inappropriate region 50 moving in accordance with the shaft alignment position 45 with the position of a hole 43.

The CPU 31 determines whether or not a shaft alignment position 45 allowing all of the holes 43 to be appropriately formed is designated (S25). In S25, the CPU 31 may determine whether or not the processing inappropriate region 50 overlaps with the position of the hole 43 based on the shaft alignment position 45 which is designated at that point in time. If at least one of the holes 43 cannot be formed (S25: NO), the process returns to S22.

If all of the holes 43 can be appropriately formed (S25: YES), the CPU 31 determines whether or not an instruction for fixedly setting the designated shaft alignment position 45 is input (S26). When the instruction is not input (S26: NO), the process returns to S22. When the instruction for fixedly setting the designated shaft alignment position is input (S26: YES), the CPU 31 sets the designated position as a shaft alignment position 45.

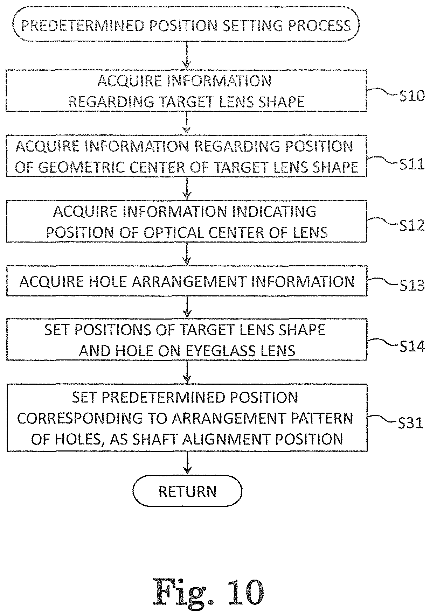

The predetermined position setting process will be described with reference to Figs. 10 to 12. In the predetermined position setting process, an appropriate shaft alignment position 45 which is determined in advance is set. Meanwhile, in the following description, steps for which the same processes as those shown in Figs. 5 and 8 will be denoted by the same step numbers as those in Figs. 5 and 8, and a description thereof will be simplified.

As shown in Fig. 10, the CPU 31 acquires information regarding the target lens shape 60, positional information regarding the geometric center GC, positional information regarding the optical center OC, and hole arrangement information (S10 to S13). The CPU 31 sets the positions of the target lens shape 60 and the holes 43 on the eyeglass lens LE (S14). Subsequently, the CPU 31 sets an appropriate position which is determined in advance as a shaft alignment position 45 (S31). In the present embodiment, a shaft alignment position 45 (hereinafter, referred to as a "predetermined position") in which the processing inappropriate region 50 does not overlap with the position of the hole 43 to be formed is determined in advance. In the predetermined position setting process, the predetermined position is set as a shaft alignment position 45, and thus an appropriate shaft alignment position 45 is easily set.

In detail, in the present embodiment, a plurality of predetermined positions are determined in advance in accordance with a hole arrangement pattern of the holes 43. In S31, the CPU 31 of the present embodiment sets a predetermined position corresponding to the hole arrangement pattern of the holes 43 which is indicated by hole arrangement information, as a shaft alignment position 45. Therefore, an appropriate shaft alignment position 45 corresponding to a hole arrangement pattern of the holes is easily set.

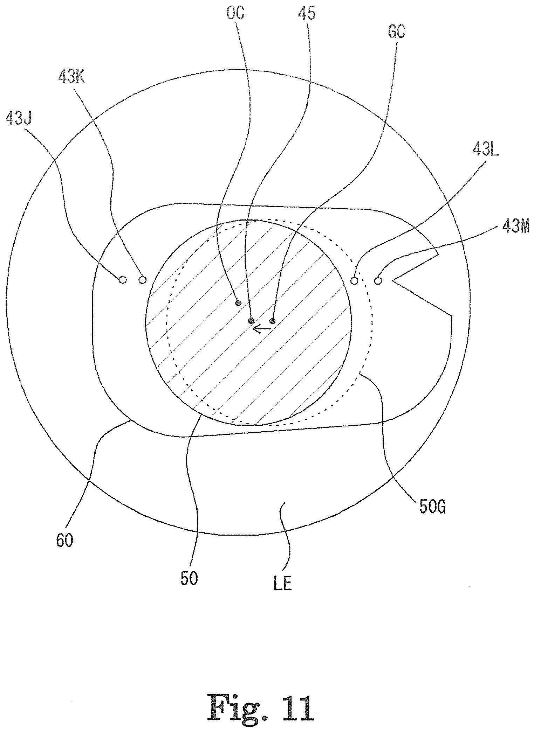

For example, in an example shown in Fig. 11, the positions of holes 43L and 43M become closer to a geometric center GC due to the influence of a notch formed in a right portion of a target lens shape 60. In this case, when the geometric center GC is set as a shaft alignment position 45, a processing inappropriate region 50G overlaps the position of a hole 43L. In the present embodiment, a position shifted leftward from the geometric center GC by a predetermined distance is determined in advance as a predetermined position corresponding to a hole arrangement pattern of the holes 43 shown in Fig. 11.

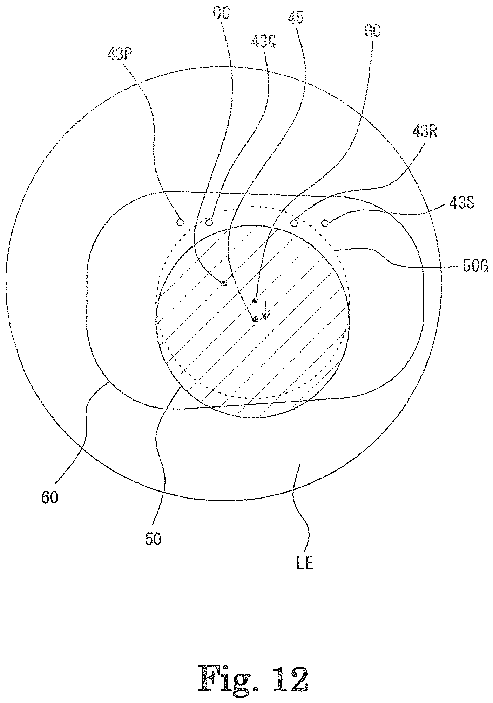

In addition, in an example shown in Fig. 12, four holes 43P, 43Q, 43R, and 43S are formed through an upper portion of a target lens shape 60. In this case, when a geometric center GC is set as a shaft alignment position 45, the positions of the hole 43Q and the hole 43R overlap a processing inappropriate region 50G. In the present embodiment, a position shifted downward from the geometric center GC is determined in advance as a predetermined position corresponding to a hole arrangement pattern of the holes 43 shown in Fig. 12.

As a matter of course, the hole arrangement pattern of the holes 43 and the predetermined position shown in Figs. 11 and 12 are just examples, and other arrangement patterns and predetermined positions may be determined. In addition, both the predetermined positions shown in Figs. 11 and 12 are positions other than at the geometric center GC. However, a plurality of predetermined positions may include a predetermined position that conforms to the geometric center GC.

A description returns to Fig. 4. When the process (S3, S5, and S6) of setting a shaft alignment position 45 is terminated, the CPU 31 performs a process of attaching the cup CU to the set shaft alignment position 45 (S8). Subsequently, the CPU 31 generates processing data based on the set shaft alignment position 45, and outputs the generated processing data to the eyeglass lens processing apparatus 38 (S9). The "processing data" as used herein refers to data which is referred to in order to control driving units (for example, driving units of the lens holding shafts 40A and 40B, a driving unit of the hole forming device 41, and the like) when the eyeglass lens processing apparatus 38 processes the eyeglass lens LE. The eyeglass lens processing apparatus 38 can control a processing operation with reference to the processing data based on the set shaft alignment position 45 to thereby appropriately process the eyeglass lens LE regardless of the set shaft alignment position 45. For example, processing data which is prepared in advance may be generated with an optical center OC or a geometric center GC as a coordinate center. In this case, the CPU 31 may correct the position of the coordinate center to the set shaft alignment position 45 to thereby newly generate processing data. Meanwhile, the CPU 31 may output information regarding the set shaft alignment position 45 to the eyeglass lens processing apparatus 38. In this case, the eyeglass lens processing apparatus 38 can generate processing data based on information regarding the shaft alignment position 45 which is acquired from the shaft alignment apparatus 1.

As described above, the shaft alignment apparatus 1 of the present embodiment sets a position at which the processing inappropriate region 50 in the vicinity of the shaft alignment position 45 does not overlap with the position of the hole 43 to be formed when the shaft alignment position 45 is set with respect to the eyeglass lens LE on which hole forming is performed, as the shaft alignment position 45. In this case, it is possible to suppress the influence of interference between the lens holding shafts 40A and 40B and the hole forming device 41. As a result, it is possible to suppress the occurrence of a defect in which the hole 43 is not appropriately formed through the eyeglass lens LE.

The shaft alignment apparatus 1 of the present embodiment sets a shaft alignment position 45 based on hole arrangement information indicating the arrangement of holes 43 to be formed. In this case, the shaft alignment position 45 is more appropriately set in accordance with the arrangement of the holes 43 to be formed.

The shaft alignment apparatus 1 of the present embodiment sets a shaft alignment position 45 based on hole arrangement information and information regarding a processing inappropriate region 50 which is present in the vicinity of the shaft alignment position 45. In this case, it is possible to more appropriately suppress the influence of interference between the lens holding shafts 40A and 40B and the hole forming device 41.

The shaft alignment apparatus 1 of the present embodiment determines whether or not the processing inappropriate region 50G overlaps with the position of the hole 43 if the geometric center GC of the target lens shape 60 is set as a shaft alignment position 45. If the shaft alignment apparatus determines that the processing inappropriate region does not overlaps with the position of the hole, the shaft alignment apparatus 1 sets the geometric center GC as a shaft alignment position 45. If the shaft alignment apparatus determines that the processing inappropriate region overlaps with the position of the hole, the shaft alignment apparatus 1 sets a position other than at the geometric center GC as a shaft alignment position 45. When the geometric center GC is set as a shaft alignment position 45, for example, a bevel angle in a case where a bevel is formed in the eyeglass lens LE, an angle of a processed surface in a case where plano-processing is performed, an angle of a hole 43 formed through the eyeglass lens LE, and the like have a tendency to be satisfactorily formed, as compared with a case where a position other than at the geometric center GC is set as a shaft alignment position 45. In the present embodiment, if a hole 43 is appropriately formed even when the geometric center GC is set as a shaft alignment position 45, the geometric center GC is set as the shaft alignment position 45, and thus the eyeglass lens LE has a tendency to be more appropriately processed.

The shaft alignment apparatus 1 of the present embodiment computationally calculates a shaft alignment position 45 at which a processing inappropriate region 50 does not overlap with the position of the hole 43 to be formed, using hole arrangement information and information regarding the processing inappropriate region 50 in a case where a position other than at a geometric center GC is set as the shaft alignment position 45. In this case, the shaft alignment apparatus 1 can automatically and appropriately set a shaft alignment position 45 other than at the geometric center GC. In detail, the shaft alignment apparatus 1 of the present embodiment computationally calculates a shaft alignment position 45 which is closest to the geometric center GC, among shaft alignment positions 45 at which the processing inappropriate region 50 does not overlap with the position of a hole 43 to be formed. In this case, influence due to a deviation of the shaft alignment position 45 from the geometric center GC is reduced.

The shaft alignment apparatus 1 of the present embodiment displays information regarding a processing inappropriate region 50 moving in accordance with a shaft alignment position 45 and the position of a hole 43 to be formed on the monitor 8 to thereby set a position designated by a user as the shaft alignment position 45. Therefore, a user can easily designate the shaft alignment position 45 at which a hole 43 is appropriately formed, while viewing the display of the monitor 8.

In the present embodiment, at least one shaft alignment position 45 other than at a geometric center GC where a processing inappropriate region 50 does not overlap with the position of a hole 43 to be formed is determined in advance. The shaft alignment apparatus 1 sets the position determined in advance as a shaft alignment position 45. In this case, the shaft alignment apparatus 1 can easily set the shaft alignment position 45 at which the hole 43 is appropriately formed.

In the present embodiment, a plurality of shaft alignment positions 45 are determined in advance in accordance with a hole arrangement pattern of holes 43. A processing inappropriate region 50 does not overlap with the position of a hole 43 to be formed at each of the shaft alignment positions 45. The shaft alignment apparatus 1 sets a position corresponding to a hole arrangement pattern of holes 43 to be formed, among the plurality of shaft alignment positions 45 determined in advance, as the shaft alignment position 45. In this case, the shaft alignment apparatus 1 can easily set a shaft alignment position 45 corresponding to a hole arrangement pattern of the holes 43.

The technique disclosed in the above-described embodiment is just an example. Therefore, it is also possible to change the technique described in the above-described embodiment. For example, the shaft alignment apparatus 1 in the above-described embodiment is a cup mounting apparatus. However, as described above, at least some of processes described in the above-described embodiment may be performed by an apparatus (for example, an eyeglass lens processing apparatus, a PC, or the like) other than the cup mounting apparatus. In addition, the shaft alignment position setting process described in the above-described embodiment is performed by the CPU 31 of one shaft alignment apparatus 1. However, controllers of a plurality of apparatuses may perform the shaft alignment position setting process in cooperation with each other.

In the above-described embodiment, when it is determined that a hole 43 cannot be appropriately formed through a case where a geometric center GC is set as a shaft alignment position 45, a shaft alignment position 45 other than at the geometric center GC is set. This process can also be changed. For example, if the CPU 31 determines that it is inappropriate to set the geometric center GC as a shaft alignment position 45, the CPU may determine whether or not it is appropriate to set an optical center OC as a shaft alignment position 45, using the same method as that in the above-described embodiment. If it is determined that it is appropriate to set an optical center OC as a shaft alignment position 45, the CPU 31 may set the optical center OC as a shaft alignment position 45. In this case, when it is appropriate to set the optical center OC as a shaft alignment position 45, the CPU 31 may set the optical center OC as a shaft alignment position 45. When the optical center OC is set as a shaft alignment position 45, for example, the lens holding shafts 40A and 40B may be easily mounted to the eyeglass lens LE, or an angle of a bevel or the like may be appropriately formed. Therefore, the shaft alignment apparatus 1 can improve processing accuracy by preferentially setting the geometric center GC and the optical center OC as a shaft alignment position 45.

In the above-described embodiment, a shaft alignment position 45 for appropriately forming a hole 43 is set after the position of the hole 43 formed through the eyeglass lens LE is set in advance. However, the position of the hole 43 may be set so as not to overlap a processing inappropriate region 50 after a shaft alignment position 45 is set. In this case, an apparatus that sets the position of the hole 43 may automatically set the position of the hole 43 to a position inside a target lens shape 60 which does not overlap with the processing inappropriate region 50, based on information regarding the processing inappropriate region 50. In addition, the apparatus may make a user operate an operation unit 9 in a state where the shape of the target lens shape 60 and the processing inappropriate region 50 are displayed on a monitor 8, to thereby make the user designate the position of the hole 43 on the outer side of the processing inappropriate region 50. This apparatus can also be expressed as follows. A hole formation position setting apparatus that sets the position of a hole to be formed through an eyeglass lens includes a unit that acquires information regarding a shaft alignment position, which is a mounting position with respect to the eyeglass lens, of a lens holding shaft that holds the eyeglass lens interposed therein during the processing of the eyeglass lens, a unit that acquires information regarding a processing inappropriate region in the vicinity of the shaft alignment position, a unit that acquires information regarding a target lens shape formed in the eyeglass lens, and a unit that sets the position of a hole on the inner side of a region in which the target lens shape is formed in the eyeglass lens and on the outer side of the processing inappropriate region, based on information regarding the shaft alignment position, information regarding the processing inappropriate region, and information regarding the target lens shape.

In the predetermined position setting process of the above-described embodiment, a predetermined position corresponding to a hole arrangement pattern of holes 43, among a plurality of predetermined positions determined in advance, is set as a shaft alignment position 45. However, this process can also be changed. For example, as a shaft alignment position 45 in a case where hole formation is performed, one position (for example, a position shifted in a predetermined direction from a geometric center GC by a predetermined distance, or the like) other than at the geometric center GC may be uniquely determined as a predetermined position.

## Claims

1. A shaft alignment apparatus comprising:
a controller (31) configured to control the shaft alignment apparatus and set a shaft alignment position, which is a mounting position with respect to an eyeglass lens (LE), of a lens holding shaft (40A, 40B) configured to hold the eyeglass lens (LE) during processing of the eyeglass lens (LE), and
wherein the shaft alignment position is set other than at a geometric center of a target lens shape in to which the eyeglass lens (LE) is to be processed,
wherein a processing inappropriate region (50) in a vicinity of the shaft alignment position is set not to overlap with a position of a hole to be formed through the eyeglass lens (LE), **characterized in that** the controller (31) acquires hole arrangement information indicating an arrangement of the hole to be formed through the eyeglass lens (LE), and sets the shaft alignment position based on the acquired hole arrangement information.

2. The shaft alignment apparatus according to claim 1, wherein the controller (31) acquires information regarding the processing inappropriate region (50) which is present in the vicinity of the shaft alignment position, and sets the shaft alignment position based on the acquired information regarding the processing inappropriate region.

3. The shaft alignment apparatus according to claim 2, wherein
the controller (31):
acquires information indicating a position of the geometric center in the eyeglass lens (LE);
determines whether or not the processing inappropriate (50) region overlaps with the position of the hole to be formed if the geometric center is set as the shaft alignment position based on the hole arrangement information and the information regarding the processing inappropriate region (50);
sets the shaft alignment position at the geometric center if the controller (31) determines that the processing inappropriate region (50) does not overlap with the position of the hole to be formed; and
sets the shaft alignment position to the position other than at the geometric center when the controller (31) determines that the processing inappropriate region (50) overlaps the position of the hole to be formed.

4. The shaft alignment apparatus according to claim 2 or 3, wherein the controller (31) calculates the shaft alignment position by using the hole arrangement information and the information regarding the processing inappropriate region (50) when the shaft alignment position is set to the position other than at the geometric center.

5. The shaft alignment apparatus according to claim 4, wherein the controller (31) calculates the shaft alignment position which is closest to the geometric center among shaft alignment positions at each of which the processing inappropriate region (50) does not overlap with the position of the hole if the shaft alignment position is set at the geometric center.

6. The shaft alignment apparatus according to claim 2 or 3, further comprising:
instruction reception means (9) for receiving an input of an instruction for designating the shaft alignment position,
wherein the controller (31) displays the processing inappropriate region (50) moving in accordance with the shaft alignment position and information regarding the position of the hole on a display unit (8), and sets the shaft alignment position by a designation through the instruction reception unit (9).

7. The shaft alignment apparatus according to claim 1, wherein
at least one shaft alignment position, which is the position other than at the geometric center, at which the processing inappropriate region (50) does not overlap with the position of the hole is determined in advance, and
the controller (31) sets a position, which is determined in advance, as the shaft alignment position.

8. The shaft alignment apparatus according to claim 1, wherein
the controller (31) determines a plurality of shaft alignment positions at each of which the processing inappropriate region (50) does not overlap with the position of the hole in advance in accordance with a hole arrangement pattern, and
the controller (31) sets, as the shaft alignment position, a position corresponding to the hole arrangement pattern corresponding to the hole indicated by the acquired hole arrangement information, among the plurality of shaft alignment positions determined in advance.

9. The shaft alignment apparatus according to any one of claims 1 to 8, wherein the controller (31) generates processing data based on information regarding the set shaft alignment position.

10. A shaft alignment position setting method comprising:
setting a shaft alignment position, which is a mounting position with respect to an eyeglass lens (LE), of a lens holding shaft (40A, 40B) configured to hold the eyeglass lens (LE) during processing of the eyeglass lens (LE), wherein the shaft alignment position is set other than at a geometric center of a target lens shape in to which the eyeglass lens (LE) is to be processed, and a processing inappropriate region (50) in a vicinity of the shaft alignment position is set not to overlap with a position of a hole to be formed through the eyeglass lens, **characterized by** acquiring hole arrangement information indicating an arrangement of the hole to be formed through the eyeglass lens, and setting the shaft alignment position based on the acquired hole arrangement information.

## Patentansprüche

1. Wellenausrichtvorrichtung, umfassend:
eine Steuereinheit (31), die zum Steuern der Wellenausrichtvorrichtung und Einstellen einer Wellenausrichtposition, die eine Montageposition in Bezug auf ein Brillenglas (LE) ist, einer Brillenglashaltewelle (40A, 40B) konfiguriert ist, die zum Halten des Brillenglases (LE) während einer Bearbeitung des Brillenglases (LE) konfiguriert ist, und
wobei die Wellenausrichtposition auf eine andere als an einem geometrischen Mittelpunkt einer Zielbrillenglasform eingestellt ist, in die das Brillenglas (LE) bearbeitet werden soll,
wobei ein ungeeigneter Bearbeitungsbereich (50) in der Nähe der Wellenausrichtposition sich nicht mit einer Position einer durch das Brillenglas (LE) auszubildenden Öffnung überlschneidend eingestellt ist, **dadurch gekennzeichnet, dass** die Steuereinheit (31) Öffnungsanordnungsinformationen erfasst, die eine Anordnung der durch das Brillenglas (LE) auszubildenden Öffnung kennzeichnen, und die Wellenausrichtposition basierend auf den erfassten Öffnungsanordnungsinformationen einstellt.

2. Wellenausrichtvorrichtung nach Anspruch 1, wobei die Steuereinheit (31) Informationen hinsichtlich des ungeeigneten Bearbeitungsbereichs (50) erfasst, der sich in der Nähe der Wellenausrichtposition befindet, und die Wellenausrichtposition basierend auf den erfassten Informationen hinsichtlich des ungeeigneten Bearbeitungsbereichs einstellt.

3. Wellenausrichtvorrichtung nach Anspruch 2, wobei
die Steuereinheit (31):
Informationen erfasst, die eine Position des geometrischen Mittelpunkts im Brillenglas (LE) kennzeichnen;
ermittelt, ob der ungeeignete Bearbeitungsbereich (50) sich mit der Position der auszubildenden Öffnung überschneidet, oder nicht, wenn der geometrische Mittelpunkt als Wellenausrichtposition basierend auf den Öffnungsanordnungsinformationen und Informationen hinsichtlich des ungeeigneten Bearbeitungsbereiches (50) eingestellt ist;
die Wellenausrichtposition auf den geometrischen Mittelpunkt einstellt, wenn die Steuereinheit (31) ermittelt, dass der ungeeignete Bearbeitungsbereich (50) sich nicht mit der Position der auszubildenden Öffnung überschneidet; und
die Wellenausrichtposition auf eine andere Position als am geometrischen Mittelpunkt einstellt, wenn die Steuereinheit (31) ermittelt, dass der ungeeignete Bearbeitungsbereich (50) sich mit der Position der auszubildenden Öffnung überschneidet.

4. Wellenausrichtvorrichtung nach Anspruch 2 oder 3, wobei die Steuereinheit (31) die Wellenausrichtposition unter Verwendung der Öffnungsanordnungsinformationen und der Informationen hinsichtlich des ungeeigneten Bearbeitungsbereichs (50) berechnet, wenn die Wellenausrichtposition auf die andere Position als am geometrischen Mittelpunkt eingestellt ist.

5. Wellenausrichtvorrichtung nach Anspruch 4, wobei die Steuereinheit (31) die Wellenausrichtposition berechnet, die dem geometrischen Mittelpunkt aus den Wellenausrichtpositionen am nächsten liegt, bei denen sich der ungeeignete Bearbeitungsbereich (50) jeweils nicht mit der Position der Öffnung überschneidet, wenn die Wellenausrichtposition auf den geometrischen Mittelpunkt eingestellt ist.

6. Wellenausrichtvorrichtung nach Anspruch 2 oder 3, ferner umfassend:
eine Anweisungsempfangseinrichtung (9) zum Empfangen einer Eingabe einer Anweisung zum Ermitteln der Wellenausrichtposition,
wobei die Steuereinheit (31) den ungeeigneten Bearbeitungsbereich (50) anzeigt, der sich gemäß der Wellenausrichtposition und Informationen hinsichtlich der Position der Öffnung auf einer Anzeigeeinheit (8) bewegt, und die Wellenausrichtposition durch eine Zuweisung mittels der Anweisungsempfangseinrichtung (9) einstellt.

7. Wellenausrichtvorrichtung nach Anspruch 1, wobei
zumindest eine Wellenausrichtposition, welche die andere Position als am vom geometrischen Mittelpunkt ist, an der sich der ungeeignete Bearbeitungsbereich (50) nicht mit der Position der Öffnung überschneidet, vorab ermittelt ist, und
die Steuereinheit (31) eine Position einstellt, die vorab als Wellenausrichtposition ermittelt ist.

8. Wellenausrichtvorrichtung nach Anspruch 1, wobei
die Steuereinheit (31) eine Vielzahl von Wellenausrichtpositionen, an denen sich der ungeeignete Bearbeitungsbereich (50) jeweils nicht mit der Position der Öffnung überschneidet, gemäß einem Öffnungsanordnungsmuster vorab ermittelt, und
die Steuereinheit (31) als Wellenausrichtposition eine Position gemäß dem Öffnungsanordnungsmuster, das der durch die erfassten Öffnungsanordnungsinformationen angezeigten Öffnung entspricht, aus der Vielzahl von vorab ermittelten Wellenausrichtpositionen einstellt.

9. Wellenausrichtvorrichtung nach einem der Ansprüche 1 bis 8, wobei die Steuereinheit (31) Bearbeitungsdaten basierend auf Informationen hinsichtlich der eingestellten Wellenausrichtposition erzeugt.

10. Verfahren zum Einstellen einer Wellenausrichtposition, das folgende Schritte umfasst:
Einstellen einer Wellenausrichtposition, die eine Montageposition in Bezug auf ein Brillenglas (LE) ist, einer Brillenglashaltewelle (40A, 40B), die zum Halten des Brillenglases (LE) während der Bearbeitung des Brillenglases (LE) konfiguriert ist, wobei die Wellenausrichtposition auf eine andere als an einem geometrischen Mittelpunkt einer Zielbrillenglasform eingestellt wird, in die das Brillenglas (LE) bearbeitet werden soll, und ein ungeeigneter Bearbeitungsbereich (50) in der Nähe der Wellenausrichtposition eingestellt wird, der sich nicht mit einer Position einer durch das Brillenglas auszubildenden Öffnung überschneidet, **gekennzeichnet durch** Erfassen von Öffnungsanordnungsinformationen, die eine Anordnung der durch das Brillenglas auszubildenden Öffnung kennzeichnen, und Einstellen der Wellenausrichtposition basierend auf den erfassten Öffnungsanordnungsinformationen.

## Revendications

1. Appareil d'alignement d'arbre comprenant :
un contrôleur (31) configuré pour contrôler l'appareil d'alignement d'arbre et définir une position d'alignement d'arbre, qui est une position de montage par rapport à une lentille de lunettes (LE), d'un arbre de maintien de lentille (40A, 40B) configuré pour maintenir la lentille de lunettes (LE) pendant le traitement du lentille de lunettes (LE), et
dans lequel la position d'alignement d'arbre est définie ailleurs qu'à un centre géométrique d'une forme de lentille cible dans laquelle la lentille de lunettes (LE) doit être traitée,
dans lequel une région inappropriée de traitement (50) au voisinage de la position d'alignement d'arbre est définie de manière à ne pas chevaucher une position d'un trou à former à travers la lentille de lunettes (LE), **caractérisé en ce que** le contrôleur (31) acquiert des informations d'agencement de trou indiquant un agencement du trou à former à travers la lentille de lunettes (LE) et définit la position d'alignement d'arbre sur la base des informations d'agencement de trou acquises.

2. Appareil d'alignement d'arbre selon la revendication 1, dans lequel le contrôleur (31) acquiert des informations concernant la région inappropriée de traitement (50) qui est présente au voisinage de la position d'alignement d'arbre et définit la position d'alignement d'arbre sur la base des informations acquises concernant la région inappropriée de traitement.

3. Appareil d'alignement d'arbre selon la revendication 2, dans lequel le contrôleur (31) :
acquiert des informations indiquant une position du centre géométrique dans la lentille de lunettes (LE) ;
détermine si la région inappropriée de traitement (50) chevauche ou non la position du trou à former si le centre géométrique est défini comme étant la position d'alignement d'arbre sur la base des informations d'agencement de trou et des informations concernant la région inappropriée de traitement (50) ;
définit la position d'alignement d'arbre au centre géométrique si le contrôleur (31) détermine que la région inappropriée de traitement (50) ne chevauche pas la position du trou à former ; et
définit la position d'alignement d'arbre à la position ailleurs qu'au centre géométrique lorsque le contrôleur (31) détermine que la région inappropriée de traitement (50) chevauche la position du trou à former.

4. Appareil d'alignement d'arbre selon la revendication 2 ou 3, dans lequel le contrôleur (31) calcule la position d'alignement d'arbre en utilisant les informations d'agencement de trou et les informations concernant la région inappropriée de traitement (50) lorsque la position d'alignement d'arbre est définie à la position ailleurs qu'au centre géométrique.

5. Appareil d'alignement d'arbre selon la revendication 4, dans lequel le contrôleur (31) calcule la position d'alignement d'arbre qui est la plus proche du centre géométrique parmi les positions d'alignement d'arbre à chacune desquelles la région inappropriée de traitement (50) ne chevauche pas la position du trou si la position d'alignement d'arbre est définie au centre géométrique.

6. Appareil d'alignement d'arbre selon la revendication 2 ou 3, comprenant en outre :
un moyen de réception d'instruction (9) pour recevoir une entrée d'une instruction pour désigner la position d'alignement d'arbre,
dans lequel le contrôleur (31) affiche la région inappropriée de traitement (50) se déplaçant selon la position d'alignement d'arbre et des informations concernant la position du trou sur une unité d'affichage (8), et définit la position d'alignement d'arbre par une désignation à travers l'unité de réception d'instruction (9).

7. Appareil d'alignement d'arbre selon la revendication 1, dans lequel
au moins une position d'alignement d'arbre, qui est la position ailleurs qu'au centre géométrique, à laquelle la région inappropriée de traitement (50) ne chevauche pas la position du trou est déterminée à l'avance, et
le contrôleur (31) définit une position, qui est déterminée à l'avance, comme étant la position d'alignement d'arbre.

8. Appareil d'alignement d'arbre selon la revendication 1, dans lequel
le contrôleur (31) détermine une pluralité de positions d'alignement d'arbre à chacune desquelles la région inappropriée de traitement (50) ne chevauche pas la position du trou à l'avance selon un motif d'agencement de trou, et
le contrôleur (31) définit, comme étant la position d'alignement d'arbre, une position correspondant au motif d'agencement de trou correspondant au trou indiqué par les informations d'agencement de trou acquises, parmi la pluralité de positions d'alignement d'arbre déterminées à l'avance.

9. Appareil d'alignement d'arbre selon l'une quelconque des revendications 1 à 8, dans lequel le contrôleur (31) génère des données de traitement sur la base d'informations concernant la position d'alignement d'arbre définie.

10. Procédé de définition de position d'alignement d'arbre comprenant :
définir une position d'alignement d'arbre, qui est une position de montage par rapport à une lentille de lunettes (LE), d'un arbre de maintien de lentille (40A, 40B) configuré pour maintenir la lentille de lunettes (LE) pendant le traitement du lentille de lunettes (LE), dans lequel la position d'alignement d'arbre est définie ailleurs qu'à un centre géométrique d'une forme de lentille cible dans laquelle la lentille de lunettes (LE) doit être traité, et une région inappropriée de traitement (50) au voisinage de la position d'alignement d'arbre est définie de manière à ne pas chevaucher une position d'un trou à former à travers la lentille de lunettes, **caractérisé par** l'acquisition d'informations d'agencement de trou indiquant un agencement du trou à former à travers la lentille de lunettes et la définition de la position d'alignement d'arbre sur la base des informations d'agencement de trou acquises.
